# EUROPEAN PATENT SPECIFICATION

(11) **EP 4 284 657 B1**
(45) Date of publication and mention of the grant of the patent: **14.05.2025**
(21) Application number: 22702266.2
(22) Date of filing: 27.01.2022
(51) Int. Cl.: B60B 1/04

(54) **CYCLE HUB ASSEMBLY**
FAHRRADNABENANORDNUNG
ENSEMBLE MOYEU DE CYCLE

(30) Priority: 27.01.2021 NL 2027447
(43) Date of publication of application: 06.12.2023
(73) Proprietor: Kubus Corporate Holding B.V., 5617 AC Eindhoven (NL)
(72) Inventor: BAIJENS, Coen, Antonius, Adrianus, Maria, 5131 WB Alphen (NL)
(74) Representative: Patentwerk B.V.
(86) International application number: PCT/EP2022/051935
(87) International publication number: WO 2022/162084

(56) References cited:
- FR-A1- 2 882 689
- US-A1- 2007 090 686
- US-A1- 2014 175 859
- US-A1- 2019 291 506

## Description

The invention relates to a cycle hub assembly. The invention in particular relates to a cycle hub assembly comprising a wheel hub provided with spoke mounting elements present in two rows spaced axially apart (evenly) around the circumference of the wheel hub, each spoke mounting element having at least one spoke mounting hole into which a wheel spoke having one end can be inserted, the centre lines of the spoke mounting holes preferably extending in a direction perpendicular or substantially perpendicular to the axial direction of the wheel hub. The invention further relates to a ring shaped spoke mounting body for use in a cycle hub assembly according to the present invention. The invention also relates to a method of manufacturing at least one cycle hub assembly according to the present invention.

A cycle hub assembly according to the preamble of claim 1 is generally known. In the known cycle hub assemblies, the spoke mounting elements are typically oversized due to limitations of the applicable production methods resulting in the spoke mounting elements typically being relatively heavy. A cycle hub assembly according to the prior art is for example described in US 2019/0291506 A1 wherein a wheel hub includes pulling spokes and static spokes connected to the disks thereof. Other examples of cycle hub assemblies are described in FR 2 882 689 A1 describing a central star shaped central portion for supporting spokes. Other examples of bicycle hubs with spokes are described in US 2007/090686 A1 and US 2014/175859 A1.

It is an object of the present invention to provide an improved cycle hub assembly which is lighter than the cycle hub assemblies according to the prior art or at least to provide an alternative to the known cycle hub assemblies. Another object of the invention is to provide a cycle hub, in particular according to the preamble of claim 1, which by means of topology optimization, has the lowest possible mass at a required strength.

The invention provides thereto a cycle hub assembly which is at least partially designed via topology optimization. The invention related to a cycle hub assembly comprising at least one wheel hub, and a plurality of spoke mounting elements, wherein the spoke mounting elements are present in two axially spaced rows positioned around the circumference of the wheel hub, wherein each spoke mounting element comprises at least one spoke mounting hole for receiving at least part of at least one spoke, and preferably wherein at least two adjacent spoke mounting elements are interconnected via at least one bridge piece, wherein at least part of said bridge piece has a width which is smaller than a width of at least one spoke mounting element connected with said bridge piece. It can also be said that an embodiment of the cycle hub assembly according to the invention is characterized in that the spoke mounting elements are interconnected by means of bridge pieces which have, at least in part, a width which is smaller than the width of the spoke mounting elements. In particular, the spoke mounting elements can support each other via the bridge pieces, so that they can take the forces that the spokes exert on the spoke mounting elements, without the spoke mounting elements having to be of a solid, and thus heavy, configuration for this purpose. It can also be said that the spoke mounting elements can be supported by the bridge pieces in order to withstand the forces exerted by the spokes on the spoke mounting elements.

The cycle hub assembly according to the present invention benefits of being optimally designed such that a beneficial force distribution is obtained. Hence, the cycle hub assembly according to the present invention can be configured such that the assembly, and in particular the configuration of the spoke mounting elements and bridge pieces has the lowest possible mass at a required strength.

When it is referred to a bridge piece, also a bridge part, bridge element and/or bridge member can be meant. The spoke mounting element(s), and in particular the spoke mounting hole(s) thereof, define a receiving space for receiving part of a spoke. The invention is configured to be used in combination with any conventional spoke for use in a (bi)cycle. In particular, the internal design of the spoke mounting element or spoke mounting hole can be designed to fit a specific type of spoke. When it is said that at least part of a bridge piece has a width which is smaller than a width of at least one spoke mounting element connected with said bridge piece, it is meant that at least part of the bridge piece has a relatively small and/or narrow configuration. When it is referred to a width of the bridge piece, the smallest width of said bridge piece can be meant. The smallest width of the bridge piece, typically present in a central part of said bridge piece, hence is typically smaller than the widest width of the spoke mounting element connected with said bridge piece. It is also conceivable that the smallest width of the bridge piece is even smaller than the smallest width of the spoke mounting element connected with said bridge piece. The width is in particular an outer dimension. The wheel hub can be any type of conventional wheel hub. The wheel hub can for example be a substantially elongated, hollow wheel hub. The spoke mounting elements and/or bridge pieces are preferably located at the distal ends of the wheel hub.

In a possible embodiment, the cycle hub assembly comprises a plurality of bridge pieces, wherein the spoke mounting elements of at least one row, and preferably of each row are interconnected via bridge pieces which at least partially have a width which is smaller than the width of at least one spoke mounting element connected with said bridge piece. In this way, an efficient orientation of spoke mounting elements and bridge pieces is obtained. It is also conceivable that multiple spoke mounting elements are interconnected via the same bridge piece. It is for example possible that at least three spoke mounting elements are interconnected via the same bridge piece. It is also imaginable that at least two pairs of spoke mounting elements, or at least two bundles of spoke mounting elements, are mutually (inter)connected via at least one bridge piece.

It is beneficial if at least one spoke mounting element is supported by at least one bridge piece. It is also conceivable that multiple spoke mounting elements are supported by at least one bridge piece. Multiple spoke mounting elements, for example multiple adjacent spoke mounting element, can be supported by the same bridge piece. It is possible that at least one bridge piece is attached to at least one spoke mounting element under the spoke mounting hole of said spoke mounting element. An embodiment of the cycle hub assembly according to the invention is also conceivable wherein the bridge pieces are attached to the spoke mounting elements below the spoke mounting holes in order to properly transmit the forces exerted by the spokes.

An embodiment of the cycle hub assembly is conceivable wherein at least part of the spoke mounting elements and bridge pieces, in particular at least part of the spoke mounting elements and bridge pieces of at least one row, are integrally connected. In such configuration the co-action between the spoke mounting elements and the bridge pieces can be further optimized. It is also conceivable that all spoke mounting elements and all bridges pieces of at least one row, and preferably of each row, are integrally connected. At least one row, and preferably each row, comprised of spoke mounting element and bridge pieces can be formed in a one piece configuration. Integral connection(s) between the spoke mounting elements and the bridge pieces can further contribute to the strength of the cycle hub assembly. A further embodiment is imaginable wherein at least part of the spoke mounting elements and/or at least part of the bridges pieces of at least one row, and preferably of each row, are integrally connected with the wheel hub. Hence, it is also conceivable that the spoke mounting elements, the bridges pieces and the wheel hub are made of a single piece.

In a preferred embodiment of the cycle hub assembly according to the present invention, at least part of the spoke mounting elements and/or at least part of the bridges pieces is manufactured via 3D printing. More preferably, all spoke mounting elements and all bridges pieces are manufactured via 3D printing. By using a 3D printing technique, the design of the spoke mounting elements and bridge pieces can be executed in detail. It is also possible that at least part of the wheel hub is manufactured via 3D printing.

In a preferred embodiment, at least part of the spoke mounting elements and/or at least part of the bridges pieces is at least partially made of metal. Non-limiting examples of metals which can be applied are aluminium, magnesium, scandium, titanium and/or combination thereof. At least part of the spoke mounting elements and/or at least part of the bridges pieces can be at least partially made of an alloy, in particular an alloy comprising aluminium, magnesium, and/or scandium. It is also conceivable that an alloy comprising at least one ceramic filler is applied. It is for example conceivable that at least part of the spoke mounting elements and/or at least part of the bridges pieces is made of Scalmalloy. The commercial product Scalmalloy^{®} by APWORKS is a well-known alloy. The same materials can be applied for manufacturing the wheel hub. It is for example possible that the wheel hub is at least partially made of an alloy, in particular an alloy comprising aluminium, magnesium, and/or scandium. It was found that an alloy comprising aluminium, magnesium and/or scandium is a suitable material for 3D printing at least parts of a cycle hub assembly according to the present invention.

It is beneficial to apply a 3D printing technique to manufacture the spoke mounting element and bridge piece(s) as this technique is more convenient for such embodiment than for example a turning and milling technique. 3D printing benefits of the need of less material, which is beneficial from environmental point of view. Also the degree of detail which can be achieved is typically higher for 3D printing. 3D printing further provides te freedom of using different materials, depending on the desired properties of the final product. The use of a 3D printing technique can also be beneficial from economical point of view, as it is typically cheaper than manufacturing by casting. But more imported, alloys, and in particular aluminium alloys, have a much lower specific strength when produced via a casting process. When comparing to 3D printing, in order to achieve the same strength with an aluminium based casting alloy, the cycle hub assembly would become at least twice as heavy.

In yet a further embodiment of the cycle hub assembly according to the present invention, it is also conceivable that at least part of the spoke mounting elements and/or at least part of the bridges pieces are at least partially made of a polymer material. It would in particular be beneficial to apply a reinforced polymer, for example but not limited to a fibre-reinforced polymer. Such polymer can for example be reinforced with fiberglass. Optionally, the wheel hub can also be at least partially made of a polymer material. Any of the materials which are applied for the spoke mounting element and/or the bridge pieces also be applied for the wheel hub. It is also imaginable that the wheel hub and the rows of spoke mounting elements and bridge pieces are made of different materials. The wheel hub could for example also be made of carbon.

In a preferred embodiment, at least part of the centre line of at least one spoke mounting element, and in particular of at least one spoke mounting hole extends in a direction substantially perpendicular to the axial direction of the wheel hub. The centre line of the spoke mounting hole could in a possible embodiment be in line with the longitudinal direction of a spoke which can be received in said spoke mounting hole. However, it is also conceivable that the centre line of the spoke mounting hole extends in a direction which is substantially perpendicular, or under any predetermined angle, with respect to the longitudinal direction of a spoke which can be received in said spoke mounting hole. It is also possible that at least part of the centre line of at least one spoke mounting hole extends in a direction substantially parallel to the radial direction of the wheel hub. Basically, the cycle hub assembly according to the present invention can be applied for any type of spokes of cycles. Hence, the spoke mounting elements can be configured to co-act with straight-pull spokes but also with J-bend spokes. The orientation of the spoke mounting elements, and in particular of the spoke mounting holes, can be determined based upon the preferred type of spokes to be applied.

The configuration of at least part of the bridge pieces, and preferably of all bridge pieces, is in particular designed via topology optimization. The invention also related to a cycle hub assembly comprising a wheel hub, and a plurality of spoke mounting elements, wherein the spoke mounting elements are present in two axially spaced rows positioned around the circumference of the wheel hub, wherein each spoke mounting element comprises at least one spoke mounting hole for receiving at least part of at least one spoke, wherein at least two adjacent spoke mounting elements are interconnected via at least one bridge piece, wherein at least part of said bridge piece is designed via topology optimization. Preferably, each row of spoke mounting elements is designed via topology optimization. Topology optimization can positively contribute to maximizing the efficiency of the design of at least the bridge parts and/or the spoke mounting elements and thus contribute to enhancing the performance of the cycle hub assembly. The topology optimization is preferably directed to reduce the required material by defining an embodiment wherein material is only present where needed, in particular in the line(s) of force.

In a possible embodiment, at least part of at least one bridge piece, and preferably of all bridge pieces is positioned at a distance above the wheel hub. It is for example conceivable that there is at least one accommodating space between at least part of an outer surface of the wheel hub and at least one bridge piece. Such embodiment allows the bridge pieces to be manufactured in an efficient configuration, which may also contribute to a material reduction as material should only be present where needed (in the lines of force).

It is imaginable that at least part of the bridge pieces are substantially identical. It is also imaginable that substantially all bridge pieces are substantially identical. Such consistency in shape may further contribute to an optimal distribution of forces. Hence, it is also imaginable that substantially all spoke mounting element are substantially identical. It is for example possible that at least one bridge piece, has a curved orientation. It is also possible that at least one bridge piece has at least partially an hourglass shape, in particular a substantially bended hourglass shape. It is preferred that at least part of a centre part of at least one bridge piece is free of any load. Hence, preferable the spoke mounting elements are connected to the distal ends of a bridge piece.

At least one spoke mounting element, and preferably each spoke mounting element, can be at least partially bowl shaped. A bowl shape is beneficial as such configuration may provide an efficient design to attach a spoke within said spoke mounting element. The bowl shape can provide a protective function for at least part of a spoke which is connected to said spoke mounting element.

The cycle hub assembly preferably has a substantially uniform or at least repeated pattern. This is beneficial for the stability of the cycle hub assembly, in particular during use. It is conceivable that at least one row, and preferably each row comprises N spoke mounting elements and wherein at least one row, and preferably each row comprises a plurality of bridge pieces, wherein the number of bridge pieces is at least 0.5N. In a possible embodiment, the cycle hub assembly comprises an equal number of spoke mounting element and bridge pieces. However, the preferred number of spoke mounting elements and bridge pieces can be chosen based upon the desired final characteristics of the cycle hub assembly, for example via topology optimization.

It is also conceivable that at least one spoke mounting element comprises at least two spoke mounting holes, wherein each spoke mounting hole is configured for receiving at least part of at least one spoke. Such embodiment is efficient from spatial point of view, as less material can be used to facilitate fixation of the spokes. It is for example conceivable that at least one spoke mounting element comprises at least two receiving spaces which are oriented in opposite directions, wherein each receiving space is provided with at least one spoke mounting hole. Possibly, at least one receiving space is substantially bowl-shaped. It is also possible that at least one, and preferably each spoke mounting element comprises at least two bowl-shaped receiving spaces which are oriented in opposite directions, wherein the spoke mounting holes are preferably present in a lower part of the receiving spaces. As a result, in a mounted condition, the spokes exert opposing forces on the spoke mounting elements so that (in the unloaded state of the wheel) they need to withstand only minor forces.

At least part of the spoke mounting elements are typically attached to the wheel hub. At least part of the spoke mounting elements can for example be attached to the circumference of the wheel hub in an axially spaced row. It is also conceivable that at least part of the bridge pieces is directly attached to the wheel hub. When it is referred to an axially spaced row, also a ring can be meant.

The cycle hub assembly according to the present invention could also comprise two ring-shaped spoke mounting bodies, wherein each spoke assembly body is formed by a row of spoke mounting elements, wherein at least two adjacent spoke mounting elements are interconnected via at least one bridge piece, wherein at least part of said bridge piece has a width which is smaller than a width of at least one spoke mounting element connected with said bridge piece. The invention also relates to a ring shaped spoke mounting body for use in a cycle hub assembly according to the present invention, wherein at least two adjacent spoke mounting elements are interconnected via at least one bridge piece, wherein at least part of said bridge piece has a width which is smaller than a width of at least one spoke mounting element connected with said bridge piece.

The invention also relates to a ring shaped spoke mounting body for use in a cycle hub assembly according to the present invention, the ring shaped spoke mounting body being provided with a plurality of spoke mounting elements; wherein the spoke mounting elements are present in two axially spaced rows positioned around the circumference of the wheel hub, wherein each spoke mounting element comprises at least one spoke mounting hole for receiving at least part of at least one spoke, wherein at least two adjacent spoke mounting elements are interconnected via at least one bridge piece, wherein at least part of said bridge piece has a width which is smaller than a width of at least one spoke mounting element connected with said bridge piece, in particular via 3D printing.

The invention further relates to a method of manufacturing at least one cycle hub assembly, in particular according to any of the embodiments described within the scope of the present invention, the method comprising the steps of providing at least one wheel hub, and providing a plurality of spoke mounting elements, wherein the spoke mounting elements are present in two axially spaced rows positioned around the circumference of the wheel hub, wherein each spoke mounting element comprises at least one spoke mounting hole for receiving at least part of at least one spoke, and wherein at least two adjacent spoke mounting elements are interconnected via at least one bridge piece, wherein preferably at least part of said bridge piece has a width which is smaller than a width of at least one spoke mounting element connected with said bridge piece. The spoke mounting elements, bridge pieces and wheel hub can be configured according to any of the described preferred embodiments in configuration and materials. It is beneficial if at least part of the spoke mounting elements and/or at least part of the bridges pieces are manufactured via 3D printing. It would also be beneficial if at least part of the wheel hub is manufactured via 3D printing.

The invention will be further elucidated by means of non-limiting exemplary embodiments illustrated in the following figures. Herein, shows:
- figure 1 a perspective view of a first embodiment of a cycle hub assembly according to the present invention;
- figure 2 a side view of the cycle hub assembly as shown in figure 1;
- figure 3 a front view of a second possible embodiment of the cycle hub assembly according to the present invention;
- figure 4 a perspective view of a third possible embodiment of a cycle hub assembly according to the present invention;
- figure 5 a side view view of the cycle hub assembly as shown in figure 4; and
- figure 6 a front view of the cycle hub assembly as shown in figures 4 and 5.

Within these figures, similar reference numbers correspond to similar or equivalent elements or features.

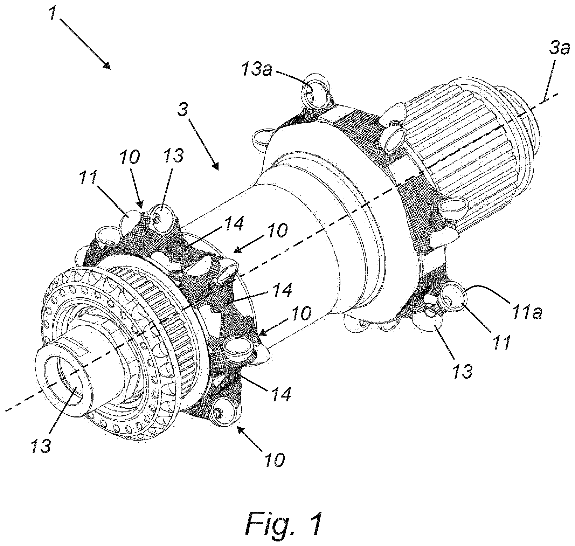

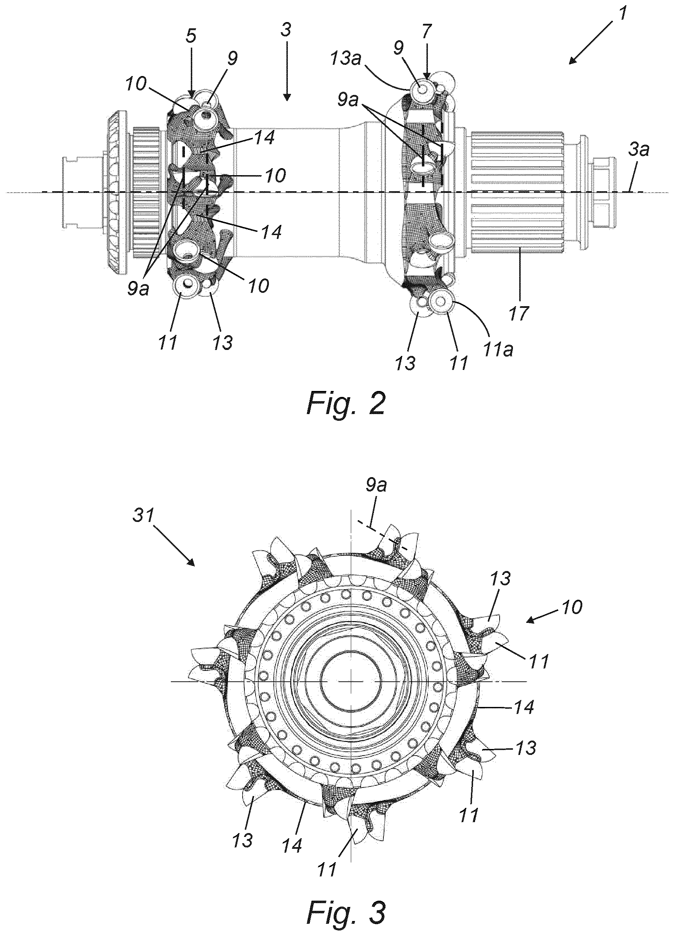

Figures 1 and 2 show a first embodiment of the cycle hub assembly for a bicycle according to the present invention in perspective and (longitudinal) side view, respectively. The cycle hub assembly 1 comprises a wheel hub 3, in particular an elongated, hollow wheel hub 3 through which a wheel axle of a cycle, such as a bicycle, can be inserted. On the wheel hub 3 there are two ring-shaped spoke mounting bodies 5 and 7, or rows, which can for example be manufactured using a 3D printing technique. These spoke mounting bodies 5 and 7 are spaced apart and are provided with spoke mounting elements 10. The spoke mounting elements 10 in the shown embodiment are present in two axially spaced rows and are evenly distributed around the circumference of the wheel hub 3. In the shown embodiment, each spoke mounting element 10 is provided with two spoke mounting holes 9 into which spokes, such as straight-pull spokes, can be inserted. The centre lines 9a of the spoke mounting holes 9 extend in a direction perpendicular or nearly perpendicular to the axial direction 3a of the wheel hub 3, this axial direction being parallel to the centre line 3a of the wheel hub 3. This is shown in figures 1 and 2. The centre lines 9a of the spoke mounting holes 9 extend almost in the tangential direction of the wheel hub 3. The spoke mounting bodies 5 and 7 are in the shown embodiment provided with spoke mounting bowls 11 and 13. In each spoke mounting bowl 11, 13 one of the said spoke mounting holes 9 is present. These spoke mounting bowls 11, 13 are provided with an edge 11a, 13a present in a plane parallel to the centre line of the wheel hub 3. At the centre of each spoke mounting bowl 11, 13 one of the spoke mounting holes 9 is present. Within each spoke mounting body 5, 7, the spoke mounting bowls 11, 13 are present in two adjacent rows. The spoke mounting bowls 11 in a first of the adjacent rows are in the shown embodiment oriented opposite to the spoke mounting bowls 13 in the other row. The spoke mounting elements 10 are interconnected via bridge pieces 14 which have, at least in part, a width smaller than the width of the spoke mounting elements 10.

Figure 3 shows a front view of a second possible embodiment of a cycle hub assembly 31 according to the present invention. The cycle hub assembly 31 has overlap with the cycle hub assembly 1 as shown in figures 1 and 2. In the shown embodiment, the bearing of the wheel hub differs from the first embodiment. It can be seen that least two adjacent spoke mounting elements 10 are interconnected via at least one bridge piece 14.

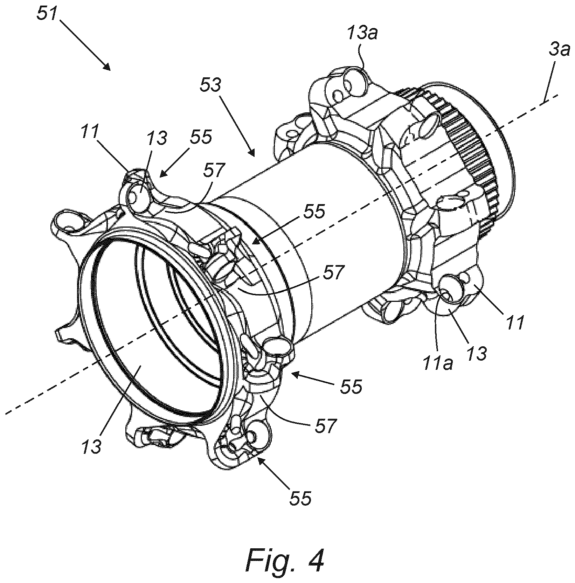

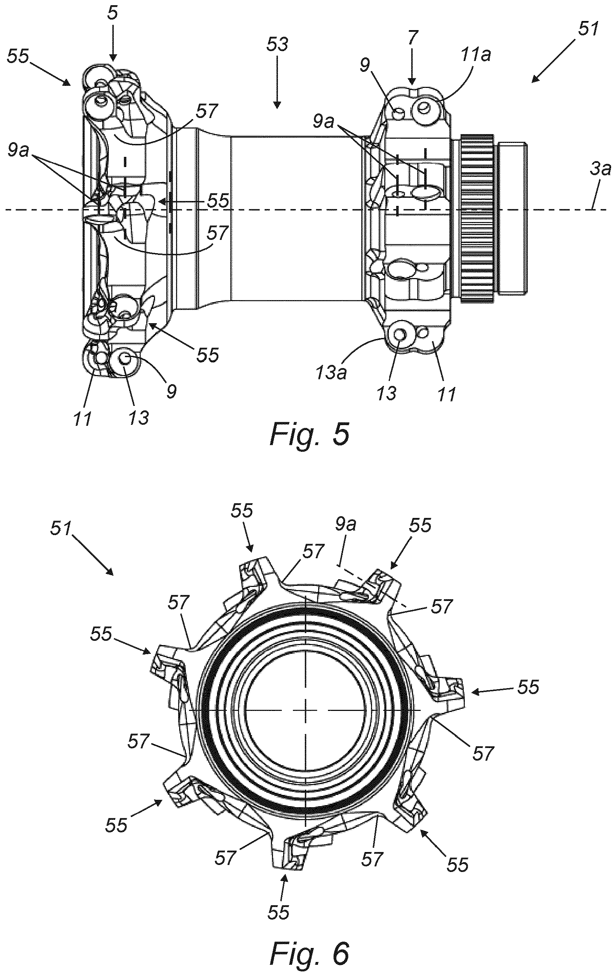

Figures 4, 5 and 6 show a third embodiment of the cycle hub assembly 51 according to the present invention in a perspective view and in side views. In the shown embodiment of the cycle hub assembly 51 comprises a plurality of spoke mounting elements 55 and the bridge pieces 57, wherein at least part of the bridge pieces 57 have a width which is smaller than a width of at least one spoke mounting element 55 connected with said bridge piece 57. The embodiment as shown, could alternatively to being formed by 3D printing, be manufactured via machining methods such as a turning and milling technique. As can be seen in the figures, the bridge pieces 57 are also narrower than the spoke mounting elements 55. In the shown embodiment, the bridge pieces 57 are not located at a distance from the wheel hub 53 but are directly positioned upon the circumference of the body of the wheel hub 53.

It will be clear that the invention is not limited to the exemplary embodiments which are illustrated and described here, but that countless variants are possible within the framework of the attached claims, which will be obvious to the person skilled in the art. In this case, it is conceivable for different inventive concepts and/or technical measures of the above-described variant embodiments to be completely or partly combined without departing from the inventive idea described in the attached claims.

The verb 'comprise' and its conjugations as used in this patent document are understood to mean not only 'comprise', but to also include the expressions 'contain', 'substantially contain', 'formed by' and conjugations thereof.

## Claims

1. Cycle hub assembly (1, 51) comprising:
- a wheel hub (3, 53); and
- a plurality of spoke mounting elements (10, 55);
wherein the spoke mounting elements (10, 55) are present in two axially spaced rows positioned around the circumference of the wheel hub (3, 53), wherein each spoke mounting element (10, 55) comprises at least one spoke mounting hole (9) for receiving at least part of at least one spoke, and
**characterised in that** at least two adjacent spoke mounting elements (10, 55) are interconnected via at least one bridge piece (14, 57), wherein at least part of said bridge piece (14, 57) has a width which is smaller than a width of at least one spoke mounting element (10, 55) connected with said bridge piece (14, 57).

2. Cycle hub assembly (1, 31, 51) according to claim 1, comprising a plurality of bridge pieces (14, 57), wherein the spoke mounting elements (10, 55) of each row are interconnected via bridge pieces (14, 57) which at least partially have a width which is smaller than the width of at least one spoke mounting element (10, 55) connected with said bridge piece (14, 57).

3. Cycle hub assembly (1, 31, 51) according to any of the previous claims, wherein multiple spoke mounting elements (10, 55) are interconnected via the same bridge piece (14, 57) and/or wherein at least one spoke mounting element (10, 55) is supported by at least one bridge piece (14, 57).

4. Cycle hub assembly (1, 31, 51) according to any of the previous claims, wherein at least part of the spoke mounting elements (10, 55) and bridge pieces (14, 57) are integrally connected and/or wherein all spoke mounting elements (10, 55) and all bridges pieces (14, 57) of at least one row, and preferably of each row, are integrally connected.

5. Cycle hub assembly (1, 31, 51) according to any of the previous claims, wherein at least part of the spoke mounting elements (10, 55) and/or at least part of the bridges pieces (14, 57) of at least one row, and preferably of each row, are integrally connected with the wheel hub (3, 53).

6. Cycle hub assembly (1, 31, 51) according to any of the previous claims, wherein the spoke mounting elements (10, 55), the bridges pieces (14, 57) and the wheel hub (3, 53) are made of a single piece.

7. Cycle hub assembly (1, 31, 51) according to any of the previous claims, wherein at least part of the spoke mounting elements (10, 55) and/or at least part of the bridges pieces (14, 57) are manufactured via 3D printing and/or wherein at least part of the wheel hub (3, 53) is manufactured via 3D printing.

8. Cycle hub assembly (1, 31, 51) according to any of the previous claims, wherein at least part of the spoke mounting elements (10, 55) and/or at least part of the bridges pieces (14, 57) are at least partially made of an alloy, in particular an alloy comprising aluminium, magnesium, and/or scandium; and/or Wherein the wheel hub (3, 53) is at least partially made of an alloy, in particular an alloy comprising aluminium, magnesium, and/or scandium.

9. Cycle hub assembly (1, 31, 51) according to any of the previous claims, wherein at least part of the spoke mounting elements (10, 55) and/or wherein at least part of the bridges pieces are (14, 57) at least partially made of a polymer material.

10. Cycle hub assembly (1, 31, 51) according to any of the previous claims, wherein at least part of the centre line (9a) of at least one spoke mounting hole (9) extends in a direction substantially perpendicular to the axial direction of the wheel hub (3, 53) , and/or wherein at least part of the centre line (9a) of at least one spoke mounting hole (9) extends in a direction substantially parallel to the radial direction of the wheel hub (3, 53).

11. Cycle hub assembly (1, 31, 51) according to any of the previous claims, wherein at least one bridge piece (14), and preferably all bridge pieces are positioned at a distance above the wheel hub (3) and/or wherein at least part of the bridge pieces (14, 57) are substantially identical.

12. Cycle hub assembly (1, 31, 51) according to any of the previous claims, wherein at least one spoke mounting element (10, 55), and preferably each spoke mounting element, is at least partially bowl shaped (11,13), and/or wherein at least one row, and preferably each row comprises N spoke mounting elements and wherein at least one row, and preferably each row comprises a plurality of bridge pieces (14, 57), wherein the number of bridge pieces is at least 0.5N.

13. Cycle hub assembly (1, 31, 51) according to any of the preceding claims, wherein at least one spoke mounting element (10, 55) comprises at least two spoke mounting holes (9), wherein each spoke mounting hole (9) is configured for receiving at least part of at least one spoke, preferably wherein at least one spoke mounting element (10, 55) comprises at least two receiving spaces which are oriented in opposite directions, wherein each receiving space is provided with at least one spoke mounting hole (9).

14. Ring shaped spoke mounting body (5, 7) for use in a cycle hub assembly according to any of the previous claims, the ring shaped spoke mounting body (5,7) being provided with a plurality of spoke mounting elements (10, 55); wherein the spoke mounting elements (10, 55) are present in two axially spaced rows positioned around the circumference of the wheel hub (3, 53), wherein each spoke mounting element (10, 55) comprises at least one spoke mounting hole (9) for receiving at least part of at least one spoke **characterised in that** at least two adjacent spoke mounting elements (10, 55) are interconnected via at least one bridge piece (14, 57), wherein at least part of said bridge piece has a width which is smaller than a width of at least one spoke mounting element (10, 55) connected with said bridge piece (14, 57).

15. Method of manufacturing at least one cycle hub assembly according to any of claims 1-13, the method comprising the steps of:
- providing a wheel hub (3, 53); and
- providing a plurality of spoke mounting elements (10, 55);
wherein the spoke mounting elements (10, 55) are present in two axially spaced rows positioned around the circumference of the wheel hub (3, 53), wherein each spoke mounting element (10, 55) comprises at least one spoke mounting hole (9) for receiving at least part of at least one spoke, and
wherein at least two adjacent spoke mounting elements (10, 55) are interconnected via at least one bridge piece (14, 57), wherein at least part of said bridge piece has a width which is smaller than a width of at least one spoke mounting element (10, 55) connected with said bridge piece (14, 57), preferably wherein at least part of the spoke mounting elements (10, 55) and/or at least part of the bridges pieces (14, 57) are manufactured via 3D printing and/or wherein at least part of the wheel hub (3, 53) is manufactured via 3D printing.

## Patentansprüche

1. Fahrradnabenanordnung (1, 51), umfassend:
- eine Radnabe (3, 53); und
- eine Vielzahl von Speichenbefestigungselementen (10, 55);
wobei die Speichenbefestigungselemente (10, 55) in zwei axial beabstandeten Reihen vorhanden sind, die um den Umfang der Radnabe (3, 53) herum angeordnet sind, wobei jedes Speichenbefestigungselement (10, 55) mindestens ein Speichenbefestigungsloch (9) zum Aufnehmen mindestens eines Teils mindestens einer Speiche umfasst, und
**dadurch gekennzeichnet, dass** mindestens zwei benachbarte Speichenbefestigungselemente (10, 55) über mindestens ein Brückenstück (14, 57) miteinander verbunden sind, wobei mindestens ein Teil des Brückenstücks (14, 57) eine Breite aufweist, die kleiner ist als eine Breite mindestens eines mit dem Brückenstück (14, 57) verbundenen Speichenbefestigungselements (10, 55).

2. Fahrradnabenanordnung (1, 31, 51) nach Anspruch 1, umfassend eine Vielzahl von Brückenstücken (14, 57), wobei die Speichenbefestigungselemente (10, 55) jeder Reihe über Brückenstücke (14, 57) miteinander verbunden sind, die zumindest teilweise eine Breite aufweisen, die kleiner ist als die Breite mindestens eines mit dem Brückenstück (14, 57) verbundenen Speichenbefestigungselements (10, 55).

3. Fahrradnabenanordnung (1, 31, 51) nach einem der vorstehenden Ansprüche, wobei mehrere Speichenbefestigungselemente (10, 55) über dasselbe Brückenstück (14, 57) miteinander verbunden sind und/oder wobei mindestens ein Speichenbefestigungselement (10, 55) von mindestens einem Brückenstück (14, 57) getragen wird.

4. Fahrradnabenanordnung (1, 31, 51) nach einem der vorstehenden Ansprüche, wobei mindestens ein Teil der Speichenbefestigungselemente (10, 55) und der Brückenstücke (14, 57) integral verbunden sind und/oder wobei alle Speichenbefestigungselemente (10, 55) und alle Brückenstücke (14, 57) mindestens einer Reihe und vorzugsweise jeder Reihe integral verbunden sind.

5. Fahrradnabenanordnung (1, 31, 51) nach einem der vorstehenden Ansprüche, wobei mindestens ein Teil der Speichenbefestigungselemente (10, 55) und/oder mindestens ein Teil der Brückenstücke (14, 57) mindestens einer Reihe und vorzugsweise jeder Reihe integral mit der Radnabe (3, 53) verbunden sind.

6. Fahrradnabenanordnung (1, 31, 51) nach einem der vorstehenden Ansprüche, wobei die Speichenbefestigungselemente (10, 55), die Brückenstücke (14, 57) und die Radnabe (3, 53) aus einem einzigen Stück hergestellt sind.

7. Fahrradnabenanordnung (1, 31, 51) nach einem der vorstehenden Ansprüche, wobei mindestens ein Teil der Speichenbefestigungselemente (10, 55) und/oder mindestens ein Teil der Brückenstücke (14, 57) mittels 3D-Druck hergestellt sind und/oder wobei mindestens ein Teil der Radnabe (3, 53) mittels 3D-Druck hergestellt ist.

8. Fahrradnabenanordnung (1, 31, 51) nach einem der vorstehenden Ansprüche, wobei mindestens ein Teil der Speichenbefestigungselemente (10, 55) und/oder mindestens ein Teil der Brückenstücke (14, 57) zumindest teilweise aus einer Legierung hergestellt sind, insbesondere einer Legierung, umfassend Aluminium, Magnesium und/oder Scandium; und/oder
wobei die Radnabe (3, 53) zumindest teilweise aus einer Legierung hergestellt ist, insbesondere einer Legierung umfassend Aluminium, Magnesium und/oder Scandium.

9. Fahrradnabenanordnung (1, 31, 51) nach einem der vorstehenden Ansprüche, wobei mindestens ein Teil der Speichenbefestigungselemente (10, 55) und/oder wobei mindestens ein Teil der Brückenstücke (14, 57) zumindest teilweise aus einem Polymermaterial hergestellt sind.

10. Fahrradnabenanordnung (1, 31, 51) nach einem der vorstehenden Ansprüche, wobei sich mindestens ein Teil der Mittellinie (9a) mindestens eines Speichenbefestigungslochs (9) in einer Richtung im Wesentlichen senkrecht zu der axialen Richtung der Radnabe (3, 53) erstreckt, und/oder wobei sich mindestens ein Teil der Mittellinie (9a) mindestens eines Speichenbefestigungslochs (9) in einer Richtung im Wesentlichen parallel zu der radialen Richtung der Radnabe (3, 53) erstreckt.

11. Fahrradnabenanordnung (1, 31, 51) nach einem der vorstehenden Ansprüche, wobei mindestens ein Brückenstück (14) und vorzugsweise alle Brückenstücke in einem Abstand über der Radnabe (3) angeordnet sind und/oder wobei mindestens ein Teil der Brückenstücke (14, 57) im Wesentlichen identisch ist.

12. Fahrradnabenanordnung (1, 31, 51) nach einem der vorstehenden Ansprüche, wobei mindestens ein Speichenbefestigungselement (10, 55) und vorzugsweise jedes Speichenbefestigungselement zumindest teilweise schalenförmig (11, 13) ist und/oder wobei mindestens eine Reihe und vorzugsweise jede Reihe N Speichenbefestigungselemente umfasst und wobei mindestens eine Reihe und vorzugsweise jede Reihe eine Vielzahl von Brückenstücken (14, 57) umfasst, wobei die Anzahl der Brückenstücke mindestens 0,5 N beträgt.

13. Fahrradnabenanordnung (1, 31, 51) nach einem der vorstehenden Ansprüche, wobei mindestens ein Speichenbefestigungselement (10, 55) mindestens zwei Speichenbefestigungslöcher (9) umfasst, wobei jedes Speichenbefestigungsloch (9) dazu konfiguriert ist, mindestens einen Teil mindestens einer Speiche aufzunehmen, vorzugsweise wobei mindestens ein Speichenbefestigungselement (10, 55) mindestens zwei in entgegengesetzte Richtungen ausgerichtete Aufnahmeräume umfasst, wobei jeder Aufnahmeraum mit mindestens einem Speichenbefestigungsloch (9) bereitgestellt ist.

14. Ringförmiger Speichenbefestigungskörper (5, 7) zur Verwendung in einer Fahrradnabenanordnung nach einem der vorstehenden Ansprüche, wobei der ringförmige Speichenbefestigungskörper (5, 7) mit einer Vielzahl von Speichenbefestigungselementen (10, 55) bereitgestellt ist; wobei die Speichenbefestigungselemente (10, 55) in zwei axial beabstandeten Reihen vorhanden sind, die um den Umfang der Radnabe (3, 53) herum angeordnet sind, wobei jedes Speichenbefestigungselement (10, 55) mindestens ein Speichenbefestigungsloch (9) zum Aufnehmen mindestens eines Teils mindestens einer Speiche umfasst, **dadurch gekennzeichnet, dass** mindestens zwei benachbarte Speichenbefestigungselemente (10, 55) über mindestens ein Brückenstück (14, 57) miteinander verbunden sind, wobei mindestens ein Teil des Brückenstücks eine Breite aufweist, die kleiner ist als eine Breite mindestens eines mit dem Brückenstück (14, 57) verbundenen Speichenbefestigungselements (10, 55).

15. Verfahren zum Herstellen mindestens einer Fahrradnabenanordnung nach einem der Ansprüche 1 bis 13, wobei das Verfahren die folgenden Schritte umfasst:
- Bereitstellen einer Radnabe (3, 53); und
- Bereitstellen einer Vielzahl von Speichenbefestigungselementen (10, 55);
wobei die Speichenbefestigungselemente (10, 55) in zwei axial beabstandeten Reihen vorhanden sind, die um den Umfang der Radnabe (3, 53) herum angeordnet sind, wobei jedes Speichenbefestigungselement (10, 55) mindestens ein Speichenbefestigungsloch (9) zum Aufnehmen mindestens eines Teils mindestens einer Speiche umfasst, und
wobei mindestens zwei benachbarte Speichenbefestigungselemente (10, 55) über mindestens ein Brückenstück (14, 57) miteinander verbunden sind, wobei zumindest ein Teil des Brückenstücks eine Breite aufweist, die kleiner ist als eine Breite mindestens eines mit dem Brückenstück (14, 57) verbundenen Speichenbefestigungselements (10, 55), vorzugsweise wobei mindestens ein Teil der Speichenbefestigungselemente (10, 55) und/oder mindestens ein Teil der Brückenstücke (14, 57) mittels 3D-Druck hergestellt sind und/oder wobei mindestens ein Teil der Radnabe (3, 53) mittels 3D-Druck hergestellt ist.

## Revendications

1. Ensemble moyeu de cycle (1, 51) comprenant :
- un moyeu de roue (3, 53) ; et
- une pluralité d'éléments de montage de rayon (10, 55) ;
dans lequel les éléments de montage de rayon (10, 55) sont présents en deux rangées espacées axialement positionnées autour de la circonférence du moyeu de roue (3, 53), dans lequel chaque élément de montage de rayon (10, 55) comprend au moins un trou de montage de rayon (9) pour recevoir au moins une partie d'au moins un rayon, et
**caractérisé en ce qu'**au moins deux éléments de montage de rayon (10, 55) adjacents sont reliés entre eux par l'intermédiaire d'au moins une pièce de liaison (14, 57), dans lequel au moins une partie de ladite pièce de liaison (14, 57) a une largeur qui est inférieure à une largeur d'au moins un élément de montage de rayon (10, 55) relié à ladite pièce de liaison (14, 57).

2. Ensemble moyeu de cycle (1, 31, 51) selon la revendication 1, comprenant une pluralité de pièces de liaison (14, 57), dans lequel les éléments de montage de rayon (10, 55) de chaque rangée sont reliés entre eux par l'intermédiaire de pièces de liaison (14, 57) qui ont au moins partiellement une largeur qui est inférieure à la largeur d'au moins un élément de montage de rayon (10, 55) relié à ladite pièce de liaison (14, 57).

3. Ensemble moyeu de cycle (1, 31, 51) selon l'une quelconque des revendications précédentes, dans lequel plusieurs éléments de montage de rayon (10, 55) sont reliés entre eux par l'intermédiaire de la même pièce de liaison (14, 57) et/ou dans lequel au moins un élément de montage de rayon (10, 55) est supporté par au moins une pièce de liaison (14, 57).

4. Ensemble moyeu de cycle (1, 31, 51) selon l'une quelconque des revendications précédentes, dans lequel au moins une partie des éléments de montage de rayon (10, 55) et des pièces de liaison (14, 57) sont reliés d'un seul tenant et/ou dans lequel tous les éléments de montage de rayon (10, 55) et toutes les pièces de liaison (14, 57) d'au moins une rangée, et de préférence de chaque rangée, sont reliés d'un seul tenant.

5. Ensemble moyeu de cycle (1, 31, 51) selon l'une quelconque des revendications précédentes, dans lequel au moins une partie des éléments de montage de rayon (10, 55) et/ou au moins une partie des pièces de liaison (14, 57) d'au moins une rangée, et de préférence de chaque rangée, sont reliées d'un seul tenant au moyeu de roue (3, 53).

6. Ensemble moyeu de cycle (1, 31, 51) selon l'une quelconque des revendications précédentes, dans lequel les éléments de montage de rayon (10, 55), les pièces de liaison (14, 57) et le moyeu de roue (3, 53) sont constitués d'une seule pièce.

7. Ensemble moyeu de cycle (1, 31, 51) selon l'une quelconque des revendications précédentes, dans lequel au moins une partie des éléments de montage de rayon (10, 55) et/ou au moins une partie des pièces de liaison (14, 57) sont fabriquées par impression 3D et/ou dans lequel au moins une partie du moyeu de roue (3, 53) est fabriquée par impression 3D.

8. Ensemble moyeu de cycle (1, 31, 51) selon l'une quelconque des revendications précédentes, dans lequel au moins une partie des éléments de montage de rayon (10, 55) et/ou au moins une partie des pièces de liaison (14, 57) sont au moins partiellement constituées d'un alliage, en particulier d'un alliage comprenant de l'aluminium, du magnésium et/ou du scandium ; et/ou dans lequel le moyeu de roue (3, 53) est au moins partiellement constitué d'un alliage, en particulier d'un alliage comprenant de l'aluminium, du magnésium et/ou du scandium.

9. Ensemble moyeu de cycle (1, 31, 51) selon l'une quelconque des revendications précédentes, dans lequel au moins une partie des éléments de montage de rayon (10, 55) et/ou dans lequel au moins une partie des pièces de liaison (14, 57) sont au moins partiellement constituées d'un matériau polymère.

10. Ensemble moyeu de cycle (1, 31, 51) selon l'une quelconque des revendications précédentes, dans lequel au moins une partie de l'axe central (9a) d'au moins un trou de montage de rayon (9) s'étend dans une direction sensiblement perpendiculaire à la direction axiale du moyeu de roue (3, 53), et/ou dans lequel au moins une partie de l'axe central (9a) d'au moins un trou de montage de rayon (9) s'étend dans une direction sensiblement parallèle à la direction radiale du moyeu de roue (3, 53).

11. Ensemble moyeu de cycle (1, 31, 51) selon l'une quelconque des revendications précédentes, dans lequel au moins une pièce de liaison (14), et de préférence toutes les pièces de liaison sont positionnées à une certaine distance au-dessus du moyeu de roue (3) et/ou dans lequel au moins une partie des pièces de liaison (14, 57) sont sensiblement identiques.

12. Ensemble moyeu de cycle (1, 31, 51) selon l'une quelconque des revendications précédentes, dans lequel au moins un élément de montage de rayon (10, 55), et de préférence chaque élément de montage de rayon, est au moins partiellement en forme de bol (11, 13), et/ou dans lequel au moins une rangée, et de préférence chaque rangée comprend N éléments de montage de rayon et dans lequel au moins une rangée, et de préférence chaque rangée comprend une pluralité de pièces de liaison (14, 57), dans lequel le nombre de pièces de liaison est d'au moins 0,5 N.

13. Ensemble moyeu de cycle (1, 31, 51) selon l'une quelconque des revendications précédentes, dans lequel au moins un élément de montage de rayon (10, 55) comprend au moins deux trous de montage de rayon (9), dans lequel chaque trou de montage de rayon (9) est configuré pour recevoir au moins une partie d'au moins un rayon, de préférence dans lequel au moins un élément de montage de rayon (10, 55) comprend au moins deux espaces de réception qui sont orientés dans des directions opposées, dans lequel chaque espace de réception est pourvu d'au moins un trou de montage de rayon (9).

14. Corps de montage de rayon en forme d'anneau (5, 7) destiné à être utilisé dans un ensemble moyeu de cycle selon l'une quelconque des revendications précédentes, le corps de montage de rayon en forme d'anneau (5, 7) étant pourvu d'une pluralité d'éléments de montage de rayon (10, 55) ; dans lequel les éléments de montage de rayon (10, 55) sont présents en deux rangées espacées axialement positionnées autour de la circonférence du moyeu de roue (3, 53), dans lequel chaque élément de montage de rayon (10, 55) comprend au moins un trou de montage de rayon (9) pour recevoir au moins une partie d'au moins un rayon, **caractérisé en ce qu'**au moins deux éléments de montage de rayon (10, 55) adjacents sont reliés entre eux par l'intermédiaire d'au moins une pièce de liaison (14, 57), dans lequel au moins une partie de ladite pièce de liaison a une largeur qui est inférieure à une largeur d'au moins un élément de montage de rayon (10, 55) relié à ladite pièce de liaison (14, 57).

15. Procédé de fabrication d'au moins un ensemble moyeu de cycle selon l'une quelconque des revendications 1 à 13, le procédé comprenant les étapes consistant à :
- fournir un moyeu de roue (3, 53) ; et
- fournir une pluralité d'éléments de montage de rayon (10, 55) ;
dans lequel les éléments de montage de rayon (10, 55) sont présents en deux rangées espacées axialement positionnées autour de la circonférence du moyeu de roue (3, 53), dans lequel chaque élément de montage de rayon (10, 55) comprend au moins un trou de montage de rayon (9) pour recevoir au moins une partie d'au moins un rayon, et
dans lequel au moins deux éléments de montage de rayon (10, 55) adjacents sont reliés entre eux par l'intermédiaire d'au moins une pièce de liaison (14, 57), dans lequel au moins une partie de ladite pièce de liaison a une largeur qui est inférieure à une largeur d'au moins un élément de montage de rayon (10, 55) relié à ladite pièce de liaison (14, 57), de préférence dans lequel au moins une partie des éléments de montage de rayon (10, 55) et/ou au moins une partie des pièces de liaison (14, 57) sont fabriquées par impression 3D et/ou dans lequel au moins une partie du moyeu de roue (3, 53) est fabriquée par impression 3D.
